(19) **Europäisches Patentamt / European Patent Office / Office européen des brevets**

(11) **EP 4 343 639 B1**

(12) **EUROPEAN PATENT SPECIFICATION**

(45) Date of publication and mention
of the grant of the patent:
**11.06.2025 Bulletin 2025/24**

(21) Application number: **21948465.6**

(22) Date of filing: **02.07.2021**

(51) International Patent Classification (IPC):
**G06N 7/00** *(2023.01)*      **G06Q 10/00** *(2023.01)*
**G05B 23/02** *(2006.01)*      **G06Q 10/20** *(2023.01)*

(52) Cooperative Patent Classification (CPC):
**G06Q 10/20; G05B 23/024; G06N 7/00;
G06Q 10/00**

(86) International application number:
**PCT/JP2021/025218**

(87) International publication number:
**WO 2023/276161 (05.01.2023 Gazette 2023/01)**

(54) **DATA ANALYSIS APPARATUS, DATA ANALYSIS PROGRAM, AND DATA ANALYSIS METHOD**

DATENANALYSEGERÄT, DATENANALYSEPROGRAMM UND DATENANALYSEVERFAHREN

APPAREIL D'ANALYSE DE DONNÉES, PROGRAMME D'ANALYSE DE DONNÉES ET PROCÉDÉ D'ANALYSE DE DONNÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**27.03.2024 Bulletin 2024/13**

(73) Proprietor: **MITSUBISHI ELECTRIC
CORPORATION
Chiyoda-ku
Tokyo 100-8310 (JP)**

(72) Inventors:
• **FUJII, Yuki
Tokyo 100-8310 (JP)**
• **TATEDOKO, Masashi
Tokyo 100-8310 (JP)**

(74) Representative: **Pfenning, Meinig & Partner mbB
Patent- und Rechtsanwälte
Theresienhöhe 11a
80339 München (DE)**

(56) References cited:
EP-A1- 3 591 484      JP-A- 2017 151 681
JP-A- 2020 160 528      JP-A- 2020 160 528
JP-A- 2020 190 980      JP-A- 2020 190 980

EP 4 343 639 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Technical Field

The present disclosure relates to a data analysis apparatus, data analysis program, and data analysis method.

### Background Art

To maintain and manage enormous numbers of facilities, a person in charge of maintenance work of the facilities executes analytical process of calculating a rank of a degradation level (hereinafter, degradation rank) of each facility from raw data such as the specifications and inspection records of each facility stored in a database.

Standardization of analytical schemes has been in progress for each type of facility. However, a method of determining a value of a parameter such as a correction coefficient of a degradation level in consideration of reliability level of a facility included in a mathematical expression of analytical process has not been established yet. Thus, to determine an analytical scheme, the person in charge of maintenance work is required to adjust the parameter such as the correction coefficient so that analytical process is repeated by changing the parameter little by little without changing raw data.

Since the number of pieces of raw data is enormous, there is a problem in which it takes time if analytical process is re-executed on the whole raw data every time the parameter is changed.

To address this problem, Patent Literature 1 discloses a technology in which sets of parameters for which analytical process has been executed in the past and intermediate data as the analytical result are stored in advance and, when analytical process is executed with the parameter after change, if analytical process has been executed in the past with that parameter after change, the intermediate data corresponding to that parameter after change is referred to and analytical process is omitted.

EP3591484A1 discloses an additional learning method where there is created determiner DE1 which has been caused to learn acceleration measurement data which has been obtained by an accelerated aging test and indicates that a facility changes from a normal state to an aged state, and advance label data which is obtained by giving a label to data indicating characteristics of aging in the acceleration measurement data. Measurement data of aging diagnosis is obtained from the facility which is operating, teacher aging degree label data is found from a record of maintenance of the facility, and additional data is obtained from the measurement data and the teacher aging degree label data. When a difference between predicted aging degree label data obtained when the determiner makes determination on all items of learning data including the additional data, and teacher aging degree label data included in the all items of the learning data is greater than a predetermined value, learning data is selected as additional learning data. The additional learning data is learned to update the determiner.

### Citation List

#### Patent Literature

Patent Literature 1: JP 4980395

### Summary of Invention

#### Technical Problem

In the conventional technology, unless parameters in a set do not completely match, analytical process is required to be re-executed for the entire raw data. Therefore, in the conventional technology, analytical process not executed in the past with the parameter after change is required to be re-executed. Thus, at this point, there is a problem in which it takes time.

An object of the present disclosure is to provide an apparatus which extracts raw data not requiring re-execution as much as possible with a small amount of calculation also for analytical process not executed in the past with a parameter after change.

#### Solution to Problem

The invention is defined in the appended set of claims. A data analysis apparatus according to the present disclosure includes:

an extracting unit, by using summary information, which is information about a degradation rank of a facility determined from a degradation level, which is calculated by using raw data indicating an attribute of the facility and a parameter, of the facility, is a set of a plurality of degradation levels with the same degradation rank, and is information having, as representative data, each piece of raw data as a source of calculation of two degradation levels among the plurality of degradation levels, to extract, when the parameter is changed, a facility requiring recalculation of the degradation level from respective facilities corresponding to the plurality of degradation levels included in the summary information; and

a calculating unit to recalculate a degradation level of the facility extracted by the extracting unit by using raw data of the extracted facility and the parameter after change.

**Advantageous Effects of Invention**

The data analysis apparatus according to the present disclosure uses summary information, and can therefore extract raw data not requiring re-execution as much as possible with a small amount of calculation also for analytical process not executed in the past with a parameter after change.

**Brief Description of Drawings**

Fig. 1 is a diagram of Embodiment 1, and is a diagram of block structure of a data analysis apparatus 100.

Fig. 2 is a diagram of Embodiment 1, illustrating a raw data group 131G.

Fig. 3 is a diagram of Embodiment 1, illustrating an analytical process definition 201.

Fig. 4 is a diagram of Embodiment 1, illustrating an analytical characteristic 110A corresponding to the analytical process definition 201 illustrated in Fig. 3.

Fig. 5 is a diagram of Embodiment 1, illustrating rectangular division of the raw data group 131G corresponding to the analytical process definition 201 illustrated in Fig. 3.

Fig. 6 is a diagram of Embodiment 1, illustrating summary information 121A corresponding to the analytical process definition 201 illustrated in Fig. 3.

Fig. 7 is a diagram of Embodiment 1, and is a flowchart illustrating operation of the analytical process definition illustrated in Fig. 3.

Fig. 8 is a diagram of Embodiment 1, and is a flowchart illustrating operation of execution of analytical process.

Fig. 9 is a diagram of Embodiment 1, and is a flowchart illustrating details of step S202 of Fig. 8.

Fig. 10 is a diagram of Embodiment 1 for describing a method of determining whether re-execution of each group corresponding to the analytical process definition 201 illustrated in Fig. 3 is required.

Fig. 11 is a diagram of Embodiment 1, and is a flowchart illustrating operation of step S204 of Fig. 8.

Fig. 12 is a diagram of Embodiment 1, illustrating division based on the final result of the entire raw data in the analytical process definition 201 illustrated in Fig. 3.

Fig. 13 is a diagram of Embodiment 1, and is a flowchart illustrating operation of step S402 of Fig. 11.

Fig. 14 is a diagram of Embodiment 1, illustrating division by a plane of the group corresponding to the analytical process definition 201 illustrated in Fig. 3.

Fig. 15 is a diagram of Embodiment 1, and is a flowchart illustrating operation of step S502 of Fig. 13.

Fig. 16 is a diagram of Embodiment 1, illustrating rectangular division of a small group corresponding to the analytical process definition 201 illustrated in Fig. 3.

Fig. 17 is a diagram illustrating hardware structure of the data analysis apparatus 100.

## Description of Embodiments

In the description of embodiments and the drawings, identical or corresponding components are provided with the same reference characters. Description of the components provided with the same reference characters is omitted or simplified as appropriate. In the following embodiments, "unit" may be read as "circuit", "step", "procedure", "process", or "circuitry" as appropriate.

In the following embodiments, an application program is described as an application. Also in the following embodiments, analytical process means degradation rank calculation. In the following, in order to express that analytical process is degradation rank calculation, such an expression as analytical process (degradation rank calculation) may be made.

Embodiment 1.

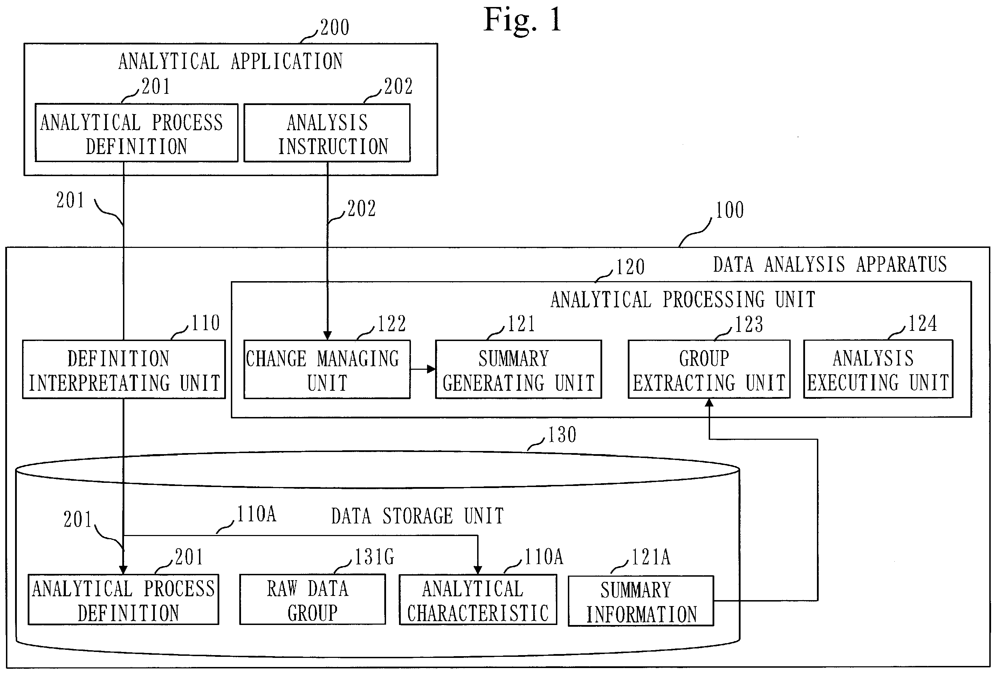

Embodiment 1 is described below with reference to Fig. 1 to Fig. 17.

***Description of Structure***

Fig. 1 illustrates the block structure of a data analysis apparatus 100. The data analysis apparatus 100 includes a definition interpreting unit 110, an analytical processing unit 120, and a data storage unit 130.

The data analysis apparatus 100 is as follows. The definition interpreting unit 110 receives an analytical process definition 201 from an analytical application 200 outside of the data analysis apparatus 100, and stores the analytical process definition 201 in the data storage unit 130. A change managing unit 122 described below receives an analysis instruction 202 from the analytical application 200. The analysis instruction 202 includes details of a change of a parameter of the analytical process definition 201.

<Analytical Processing Unit 120>

The analytical processing unit 120 includes a summary generating unit 121, the change managing unit 122, a group extracting unit 123, and an analysis executing unit 124. The group extracting unit 123 is an extracting unit. The analysis executing unit 124 is a calculating unit.

<Summary Generating Unit 121>

When the analysis instruction 202 received from the analytical application 200 includes an instruction for generating summary information described below, the summary generating unit 121 uses the analytical result of the analysis executing unit 124 and the information stored in the data storage unit 130 to generate summary information 121A of raw data. The summary generating unit 121 causes the generated summary information 121A to be stored in the data storage unit 130.

<Change Managing Unit 122>

The change managing unit 122 receives the analysis instruction 202 from the analytical application 200. The analysis instruction 202 includes details of change of a parameter.

<Group Extracting Unit 123>

By using the summary information 121A stored in the data storage unit 130, the group extracting unit 123 extracts, from the summary information 121A, a group requiring re-execution of analytical process by the analysis executing unit 124. Also, by using the summary information 121A, the group extracting unit 123 extracts a group not requiring re-execution of analytical process.

<Analysis Executing Unit 124>

The analysis executing unit 124 executes analytical process on raw data of which the analysis executing unit 124 is notified by the group extracting unit 123 as requiring re-execution, with a parameter after change. The analysis executing unit 124 takes the result of analytical process as the final result. As for raw data of which the analysis executing unit 124 is not notified as requiring re-execution, the analysis executing unit 124 takes the result of calculation of a representative point of a group to which that raw data belongs as the final result.

<Data Storage Unit 130>

The data storage unit 130 has stored therein (1) analytical process definition 201, (2) raw data group 131G, (3) analytical characteristic 110A, and (4) summary information 121A.

<Raw Data Group 131G>

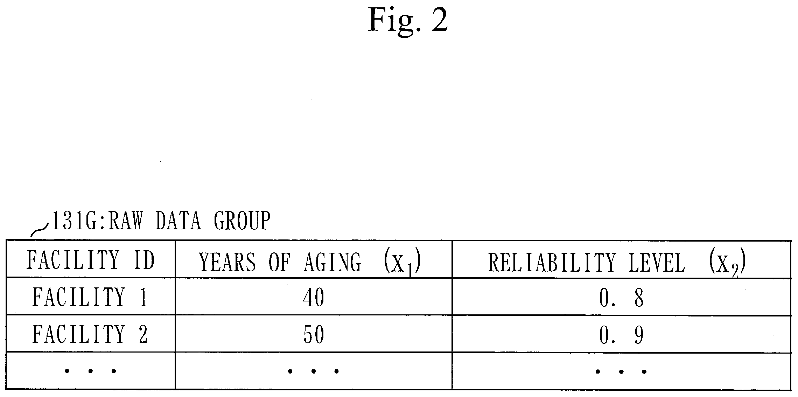

Fig. 2 illustrates the raw data group 131G as a table. The raw data group 131 G is information indicating the entire raw data. Each row of the raw data group 131G is one piece of raw data. The raw data group 131G has columns of facility ID, years of aging, and reliability level. Each column of the table indicating the raw data group 131G represents a degradation factor for each facility, such as years of aging or reliability level, and these degradation factors are registered as converted into numbers.

In Fig. 2, the raw data has data items of two pieces of numerical value data, years of aging $x_1$ and reliability level $x_2$. However, the raw data may have a data item of one piece of numerical value data or may have data items of a plurality of, three or more, pieces of numerical value data.

<Analytical Process Definition 201>

The data storage unit 130 has the analytical process definition 201 stored therein.

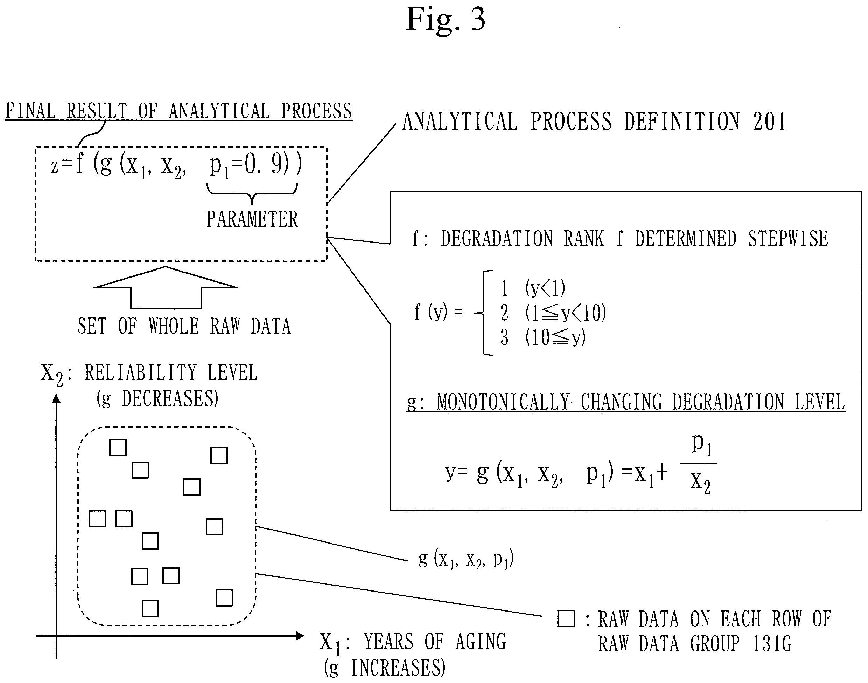

Fig. 3 illustrates the analytical process definition 201. $f(g(x_1, x_2, p_1))$ in Fig. 3 is the analytical process definition 201. In this manner, the analytical process definition 201 is represented as a mathematical expression. The analytical process definition 201 is a definition of analytical process (degradation rank calculation) for finding a degradation rank of a facility from each piece of raw data of the raw data group 131G.

As illustrated in Fig. 3, the function g is as follows.

$$y = g(x_1, x_2, p_1) = x_1 + p_1/x_2.$$

y is a degradation level of a facility. $x_1$ represents years of aging, and $x_2$ represents reliability level. $p_1$ is a parameter indicating a weight of the reliability level $x_2$. $f(g(x_1, x_2, p_1))$ indicates a rank of the degradation level of the facility. The degradation level g of the facility monotonically increases with respect to the years of aging $x_1$ and monotonically decreases with respect to the reliability level $x_2$. The function g is a mathematical expression taking numerical values $x_1$ and $x_2$ of each row of the raw data group 131G of Fig. 2 as inputs. The input $x_1$ and the input $x_2$ of the function g are two data items, the years of aging (xi) and the reliability level ($x_2$) in Fig. 2, and $p_1$ is a parameter indicating a weight of the reliability level $x_2$. The $f(g(x_1, x_2, p_1))$ is calculated for each piece of raw data in each row of the raw data group 131G of Fig. 2. The function f(y) is

$$f(y) = 1 \ (y < 1), \ 2 \ (1 \le y < 10), \ 3 \ (10 \le y).$$

That is, the degradation rank f(y) of the facility is determined stepwise in a manner such that the degradation rank is 1 when the degradation level g, as an interim result of analytical process, is smaller than 1, the degradation rank is 2 when the degradation level g is 1 or larger and smaller than 10, and the degradation rank is 3 when the degradation level g is 10 or larger.

<Analytical Characteristic 110A>

The data storage unit 130 has the analytical characteristic 110A stored therein. The analytical characteristic 110A has registered thereon a list of information about stages (degradation ranks) for determining the final result of analytical process and interim results (degradation levels g) as inputs of the final results (degradation ranks f).

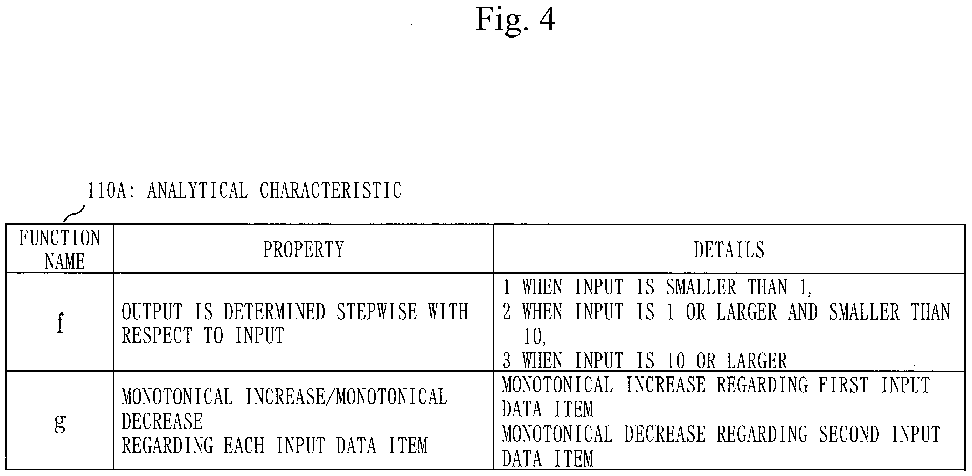

Fig. 4 illustrates the details of the analytical characteristic 110A corresponding to the analytical process definition 201 illustrated in Fig. 3. The analytical characteristic 110A is extracted by the definition interpreting unit 110 from the analytical process definition 201, as at step S103 described further below. With reference to Fig. 4, details of the analytical characteristic 110A corresponding to $f(g(x_1, x_2, p_1))$, which is the analytical process definition 201 illustrated in Fig. 3, are described. As information about stages (degradation ranks) for determining the degradation rank f, there are a lower limit (g = 1) and an upper limit (g = 10) of the degradation level g corresponding to the value of the degradation rank f. As monotonicity of the degradation level g, there is a property in which the degradation level g monotonically increases with respect to the years of aging and the degradation level monotonically decreases with respect to the reliability level.

<Summary Information 121A>

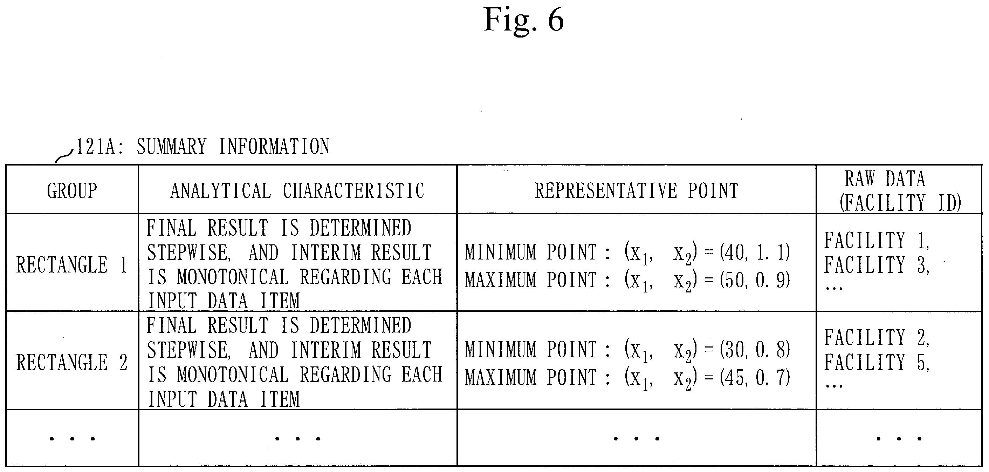

The data storage unit 130 has stored therein the summary information 121A described below in Fig. 6. The summary information 121A includes the following (1), (2), and (3).

(1) A group obtained by dividing the raw data group 131G into rectangles by operation described further below.
(2) A list of sets of a point taking a minimum value (hereinafter, minimum point) and a point taking a maximum value (hereinafter, maximum point) without depending on the value of a parameter in a rectangle covering each group.
(3) A list of raw data belonging to each group.

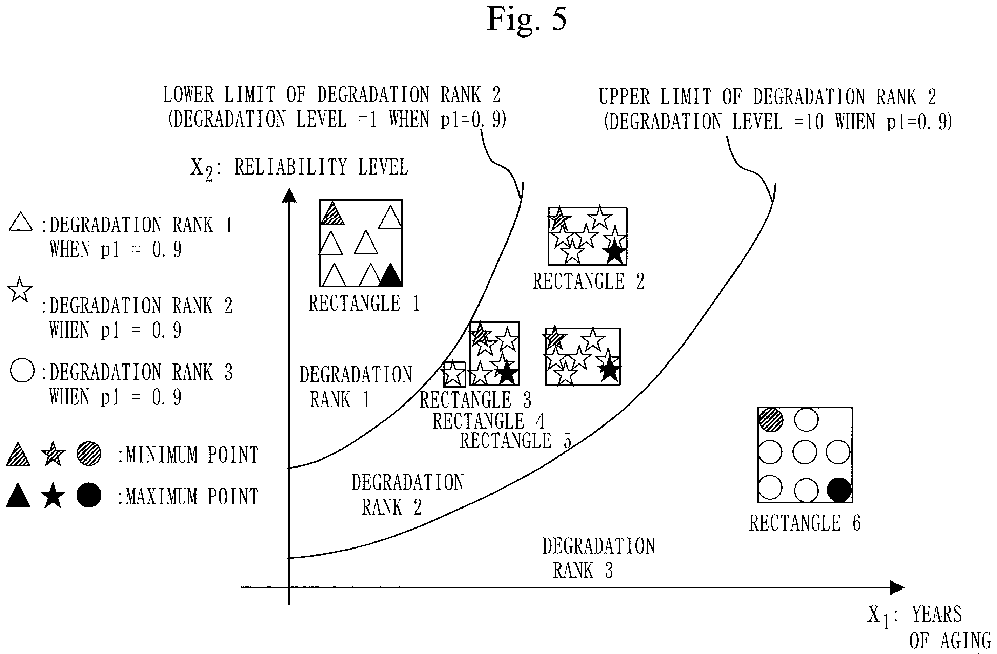

Fig. 5 illustrates rectangular division of the raw data group 131G in the analytical process definition 201 (f(g)) illustrated in Fig. 3.

In Fig. 5, the horizontal axis represents the years of aging $x_1$ and the vertical axis represents the reliability level $x_2$. In Fig. 5, triangles, stars, and circles represent raw data included in the raw data group 131G.

In Fig. 5, for each rectangle, raw data as a minimum point of the degradation level g is at an upper-left end point in one rectangle, and raw data as a maximum point of the degradation level g is at a lower-right end point of the rectangle. The reason for this is that, as illustrated in Fig. 3, the degradation level g monotonically increases with respect to the years of aging $x_1$ and monotonically decreases with respect to the reliability level $x_2$.

Description is further specifically made. As illustrated in Fig. 3,

$$g = x_1 + p_1/x_2.$$

$p_1$ is a positive number. Thus, g decreases with a decrease in the years of aging $x_1$ and an increase in the reliability level $x_2$. Also, g increases with an increase in the years of aging $x_1$ and a decrease in the reliability level $x_2$

In Fig. 5, a graph of a lower limit of degradation rank 2 (p1 = 0.9, degradation level g = 1) is a graph of $(x_1, x_2)$ satisfying the following expression.

$$1 = x_1 + 0.9/x_2$$

An upper side in this graph represents a region where the degradation level g is smaller than 1. A graph of an upper limit of degradation rank 2 (p1 = 0.9, degradation level g = 10) is similar to a graph of a lower limit of degradation rank 2 (p1 = 0.9, degradation level g = 1), and is a graph of $(x_1, x_2)$ satisfying

$$10 = x_1 + 0.9/x_2.$$

Fig. 6 illustrates the summary information 121A corresponding to the rectangular division of Fig. 5. With reference to Fig. 6, the summary information 121A corresponding to rectangular division of Fig. 5 is described.

The summary information is information about the final result of evaluation of an evaluation target determined stepwise from the interim result of evaluation of the evaluation target calculated by using raw data indicating an attribute of the evaluation target and a parameter.

The summary information is a set of a plurality of interim results with the same final result, and has, as representative data, each piece of raw data which is a source of calculation of two interim results among the plurality of interim results. Here, the evaluation target is a target for which a defined evaluation item is evaluated. In Embodiment 1, an example of the evaluation target is a facility, an example of the defined evaluation item is degradation. Also, an example of the interim result is a degradation level, and an example of the final result is a degradation rank. Specifically, the summary information is as follows.

The summary information 121A is information about a degradation rank of a facility determined from a degradation level, which is calculated by using raw data indicating an attribute of the facility and a parameter, of the facility. The summary information 121A is a set of a plurality of degradation levels with the same degradation rank, and information having, as representative data, each piece of raw data which is a source of calculation of two degradation levels among the plurality of degradation levels. In Fig. 6, each of rectangle 1, rectangle 2, ... is the summary information 121A. Specifically, description is made as follows. As illustrated in Fig. 6, each of groups obtained by division into rectangles is a set of pieces of raw data (each raw in Fig. 2) included in the same rectangle.

As illustrated in Fig. 6, each group is a set of pieces of raw data included in the same rectangle. The analytical characteristic 110A required for information about a group as one rectangle to be used for determination as to whether degradation rank re-execution is required is a property in which the degradation rank is determined stepwise and the degradation level has monotonicity for each data item (X1, X2) as described further below.

***Description of Operation***

The operation of the data analysis apparatus 100 is described. In the drawings of flowcharts described below, what is indicated in parentheses at each step is a subject of operation. The operation procedure of the data analysis apparatus 100 is equivalent to a data analysis method. A program achieving the operation of the data analysis apparatus 100 is equivalent to a data analysis program 101.

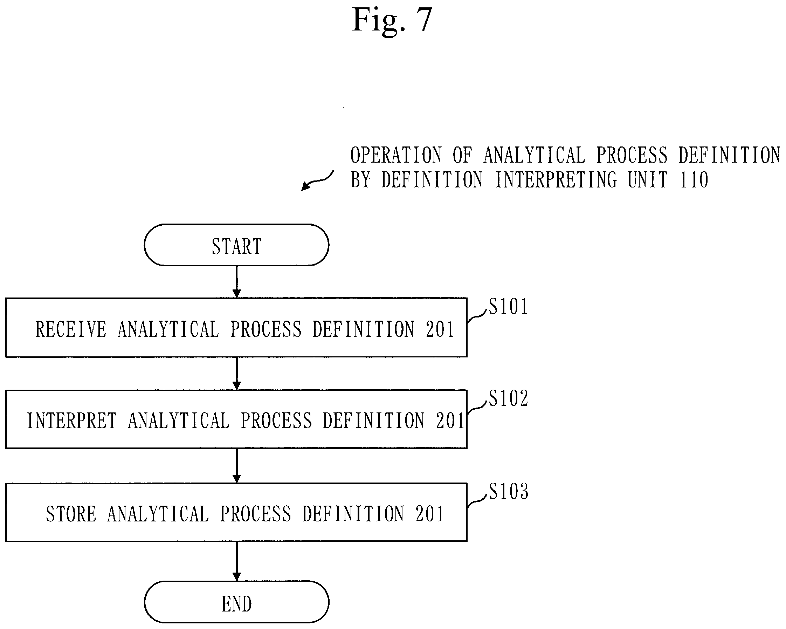

Fig. 7 is a flowchart illustrating operation of the analytical process definition defining analytical process (degradation rank calculation) of the data analysis apparatus 100. Based on Fig. 7, the operation of the analytical process definition by the data analysis apparatus 100 is described.

(Step S101: Reception of Analytical Process Definition 201)

The definition interpreting unit 110 receives the analytical process definition 201 from the analytical application 200.

(Step S102: Interpretation of Analytical Process Definition)

The definition interpreting unit 110 interprets the received analytical process definition 201.

(Step S103: Storage of Analytical Process Definition)

The definition interpreting unit 110 causes the interpreted analytical process definition 201 to be stored in the data storage unit 130. Also, the definition interpreting unit 110 determines whether the analytical characteristic 110A of the function described in Fig. 4 is included in the analytical process definition 201. When determining that the analytical characteristic 110A of the function is included, the definition interpreting unit 110 causes the included analytical characteristic 110A to be stored in the data storage unit 130 as the analytical characteristic 110A.

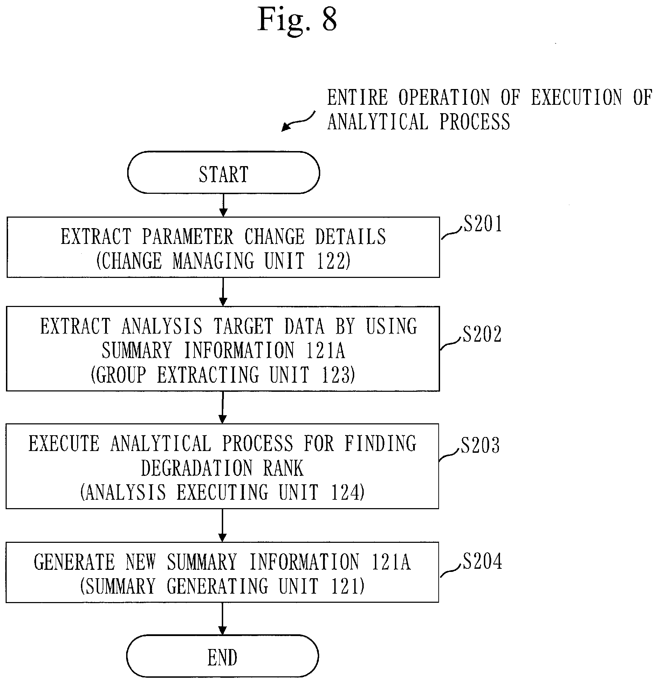

Fig. 8 is a flowchart illustrating operation of execution of analytical process by the data analysis apparatus 100. Based on Fig. 8, the operation of execution of analytical process is described.

(Step S201: Extraction of Details of Change of Parameter)

The change managing unit 122 receives, from the analytical application 200, the analysis instruction 202 including details of change of a parameter of the analytical process definition 201. The change managing unit 122 extracts the details of change of the parameter from the analysis instruction 202, and notifies the summary generating unit 121 of it.

(Step S202: Extraction of Analysis Target Data)

When the parameter p1 is changed, by using the summary information 121A, the group extracting unit 123 extracts a facility requiring recalculation of the degradation level g from respective facilities corresponding to the plurality of degradation levels g included in the summary information 121A. When a degradation level of the facility is calculated by the analysis executing unit 124, the summary generating unit 121 generates new summary information different from the summary information 121A used at step S202. The summary generating unit 121 generates summary information for each of the plurality of degradation ranks. By using each summary information generated for each degradation rank, the group extracting unit 123 extracts a facility requiring recalculation of a degradation level.

Description is specifically made below.

With the use of the summary information 121A stored in the data storage unit 130, the group extracting unit 123 extracts a group not requiring re-execution of analytical process (degradation rank calculation) from the summary information 121A, and calculates the analytical result for the representative point of each group with the parameter $p_1$ after change. Details of the present step are described further below.

(Step S203: Execution of Analytical Process)

For the facility extracted by the group extracting unit 123, the analysis executing unit 124 recalculates its degradation level by using the raw data of the extracted facility and the parameter after change. Description is specifically made below.

The analysis executing unit 124 executes analytical process (degradation rank calculation) on raw data (at least any row in Fig. 2) of which the analysis executing unit 124 is notified by the group extracting unit 123 as requiring re-execution, with the parameter $p_1$ after change included in the analysis instruction 202 received at step S201. Then, the analysis executing unit 124 takes the result of analytical process as the final result. As for the other pieces of raw data, that is, raw data belonging to a group not requiring re-execution in the determination at step S202, the analysis executing unit 124 takes the calculation result of a representative point of a group to which the raw data belongs as the final result.

(Step S204: Generation of Summary Information of Raw Data)

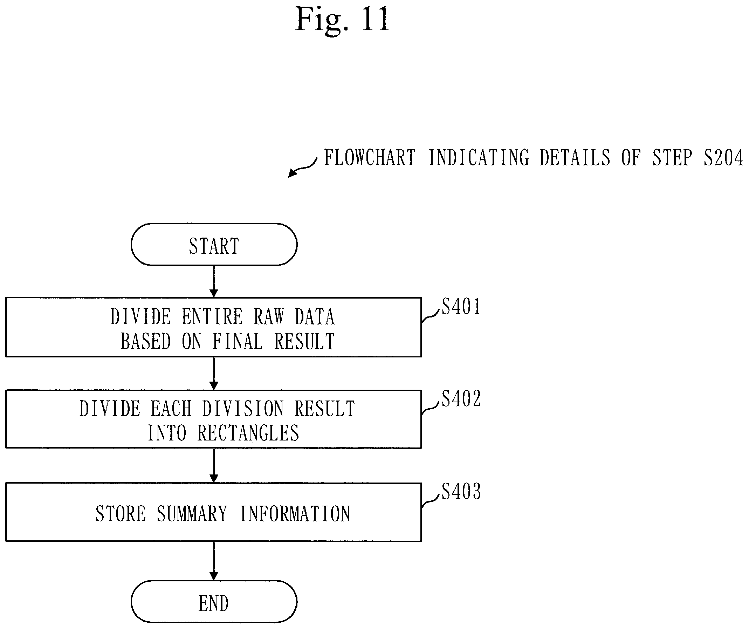

The summary generating unit 121 determines whether an instruction for generating the summary information 121A is included in the analysis instruction 202 from the analytical application 200. When the determination result is YES, the summary generating unit 121 corrects the summary information 121A used at step S202 by using the analytical result of the analysis executing unit 124 and the information stored in the data storage unit 130, and causes the corrected summary information 121A to be stored in a storage unit 130. That is, the summary generating unit 121 corrects the summary information 121A so that the summary information 121A corresponds to the parameter $p_1$ after change. The correction of the summary information 121A includes re-generation of the summary information 121A. Details of the present step S204 are described further below in Fig. 11.

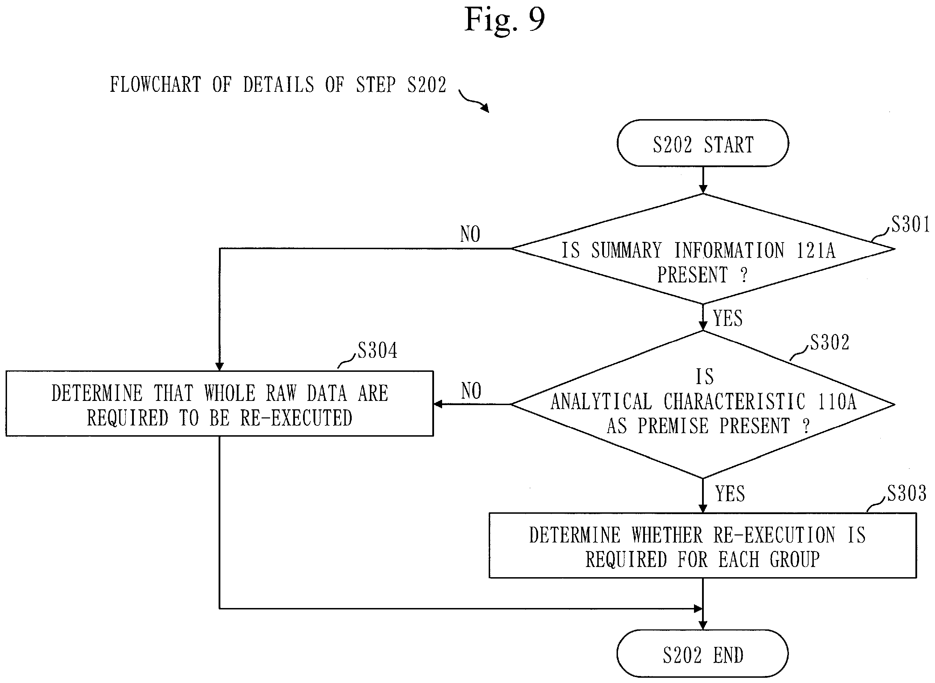

Fig. 9 is a flowchart illustrating details of operation of step S202 by the group extracting unit 123 extracting, from the raw data group 131G, analysis target data which is a target for recalculation of a degradation rank.

(Step S301: Determination as to Whether Summary Information Is Present)

The group extracting unit 123 refers to the data storage unit 130 to determine whether the summary information 121A has been registered. When the determination result is YES, the process proceeds to step S302. When the determination result is NO, the process proceeds to step S304.

(Step S302: Determination as to Whether Analytical Characteristic Is Useable)

The group extracting unit 123 determines whether the analytical process definition 201 in the data storage unit 130 includes the analytical characteristic 110A for the summary information 121A to become usable, with reference to the analytical characteristic 110A and the analytical process definition 201. When the determination result is YES, the process proceeds to step S303. When the determination result is NO, the process proceeds to step S304.

(Step S303: Determination as to Whether Re-Execution Is Required for Group)

The summary information 121A is taken as a set of one or more interim results (degradation levels). By using representative data and the parameter after change, the group extracting unit 123 calculates one or more interim results (degradation levels) of evaluation targets (facilities) having the representative data. Then, the group extracting unit 123 determines the final results (degradation ranks) of the calculated one or more interim results (degradation levels), and determines whether the determined one or more final results (degradation ranks) match. When the one or more final results (degradation ranks) match, the group extracting unit 123 extracts each of the evaluation targets (facilities) corresponding to the one or more interim results (degradation levels) included in the summary information 121A as an evaluation target (facility) not requiring recalculation of an interim result. Description is specifically made below.

The group extracting unit 123 determines whether re-execution is required for each group included in the summary information 121A (Fig. 6). That is, the group extracting unit 123 determines whether recalculation of a degradation rank is required for each group of Fig. 5. In determination as to whether re-execution is required, the group extracting unit 123 first calculates the final result f for two representative points in the group with the parameter $p_1$ after change (step S201). The condition of determination as to whether re-execution of degradation rank calculation is required is whether the degradation ranks f of these two representative points are the same. When the degradation ranks f of the two representative points match, the group extracting unit 123 determines that re-execution of degradation rank calculation for the whole raw data belonging to that group is not required. In this case, the group extracting unit 123 takes the final result (degradation rank) after change of the parameter $p_1$ of that group as the same final result (degradation rank) for the representative points. When the degradation ranks f of the two representative points do not match, the group extracting unit 123 determines that re-execution of degradation rank calculation is required for the whole raw data belonging to that group as one rectangle.

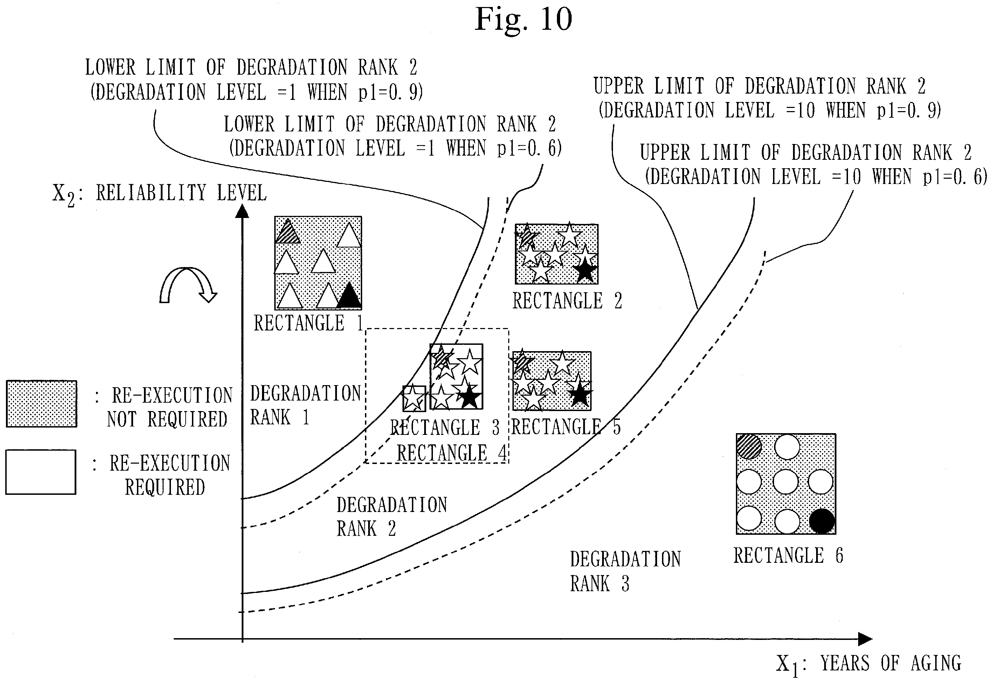

Fig. 10 schematically illustrates determination as to whether re-execution of degradation rank calculation at step S303 is required. The analytical process definition 201 is the function f of Fig. 3.

In a graph of a lower limit (degradation level = 1 when p1 = 0.6) of degradation rank 2 of Fig. 10, $p_1$ becomes 0.6 from 0.9. A graph of $1 = x_1 + 0.6/x_2$ is on a lower side of $1 = x_1 + 0.9/x_2$. This is evident if consideration is given by fixing $x_1$. The same goes for a graph of an upper limit (degradation level = 10 when p1 = 0.6) of degradation rank 2.

In Fig. 10, among six rectangles, for a rectangle 1, a rectangle 2, a rectangle 5, and a rectangle 6, the final results (degradation ranks) of two representative points in each rectangle match, with the parameter $p_1$ after change = 0.6. Thus, for the rectangle 1, the rectangle 2, the rectangle 5, and the rectangle 6, the group extracting unit 123 determines that re-execution is not required. For a rectangle 3 and a rectangle 4, the final results (degradation ranks) of two representative points in each rectangle do not match. Thus, for the rectangle 3 and the rectangle 4, the group extracting unit 123 determines that re-execution of degradation rank calculation is required.

(Step S304: Determination That Re-Execution Is Required for Whole Raw Data)

The group extracting unit 123 determines that re-execution of degradation rank calculation is required for the whole raw data, and step S202 ends.

Fig. 11 is a flowchart illustrating operation of step S204 of Fig. 8 by the summary generating unit 121 generating the summary information 121A. Generation of the summary information 121A includes re-generation.

With reference to Fig. 11, step S204 is described.

(Step S401: Division Based on Final Result)

Regarding analytical process executed last, the summary generating unit 121 organizes a plurality of pieces of raw data with the same degradation rank as the final result into one group.

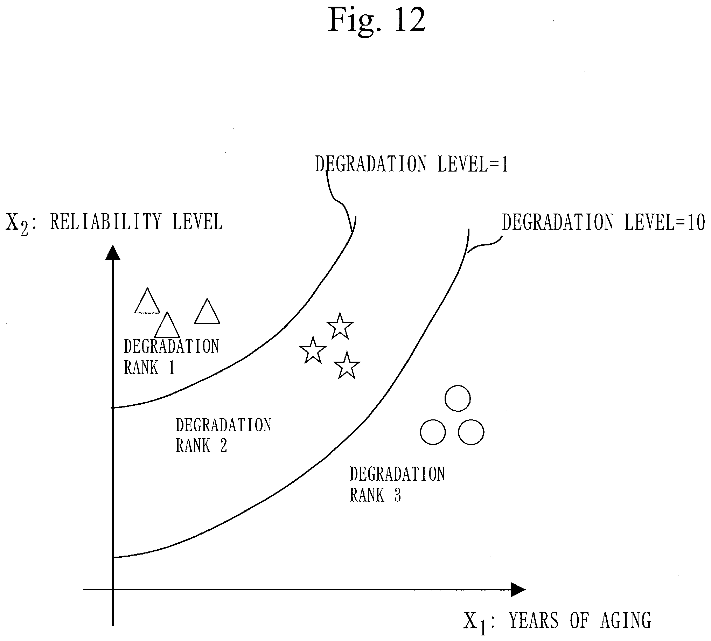

Fig. 12 illustrates division regarding the final result obtained by calculating a degradation rank of each piece of raw data in the raw data group 131G by using the analytical process definition 201 (function f) illustrated in Fig. 3. The final result is a degradation rank. In Fig. 12, division is illustrated in a case in which degradation ranks of three ranges are present.

(Step S402: Division into Rectangles)

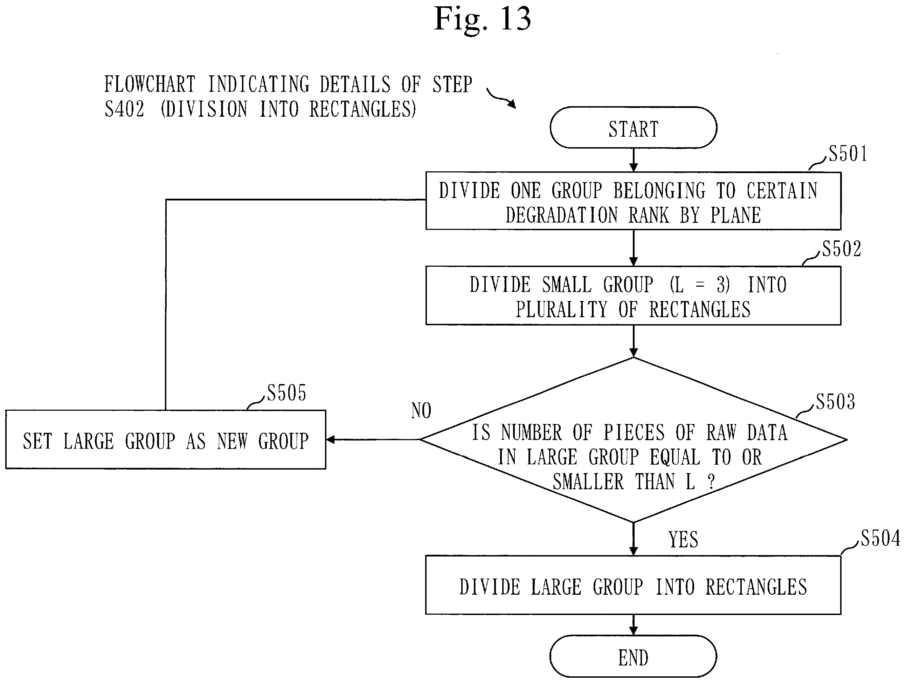

The summary generating unit 121 divides the group divided at step S401 into a plurality of rectangular regions, and organizes raw data belonging to the inside of the same rectangle into one group and finds a representative point of the group. Details of step S402 are described further below in Fig. 13.

(Step S403: Storage of Summary Information)

For the group of rectangles found at step S402, the summary generating unit 121 finds a list of representative points and raw data belonging to that group, and causes the list to be stored in the data storage unit 130 as the summary information 121A.

The summary information 121A of Fig. 6 has been generated in this manner.

Fig. 13 is a flowchart illustrating operation of step S402 which is a step of division into rectangles. With reference to Fig. 13, step S402 is described.

(Step S501: Division by Plane)

The summary generating unit 121 generates the summary information according to either proximity between the interim result of the evaluation target and a lower limit of a stage of determining the final result of evaluation of the evaluation target or proximity between the interim result of the evaluation target and an upper limit of the stage of determining the final result of evaluation of the evaluation target. Specifically, description is made as follows.

The summary generating unit 121 selects a plane (straight line) perpendicular to a certain axis so that one group with the same degradation rank f is divided into a small group including a point where the degradation level g of the interim result is in proximity to the lower limit (degradation level g = 1) or the upper limit (degradation level g = 10) of the degradation rank f and a large group of others. Here, as for a lower limit 1 or an upper limit 3 of the degradation rank f, in the case of the analytical process definition 201 illustrated in Fig. 3, the degradation rank f as the final result is determined by taking the degradation level g = 1 and the degradation level g = 10 as boundaries. Thus, the lower limit = 1 and the upper limit = 3 of the degradation rank f correspond to a curve with the degradation level g = 1 and a curve with the degradation level g = 10.

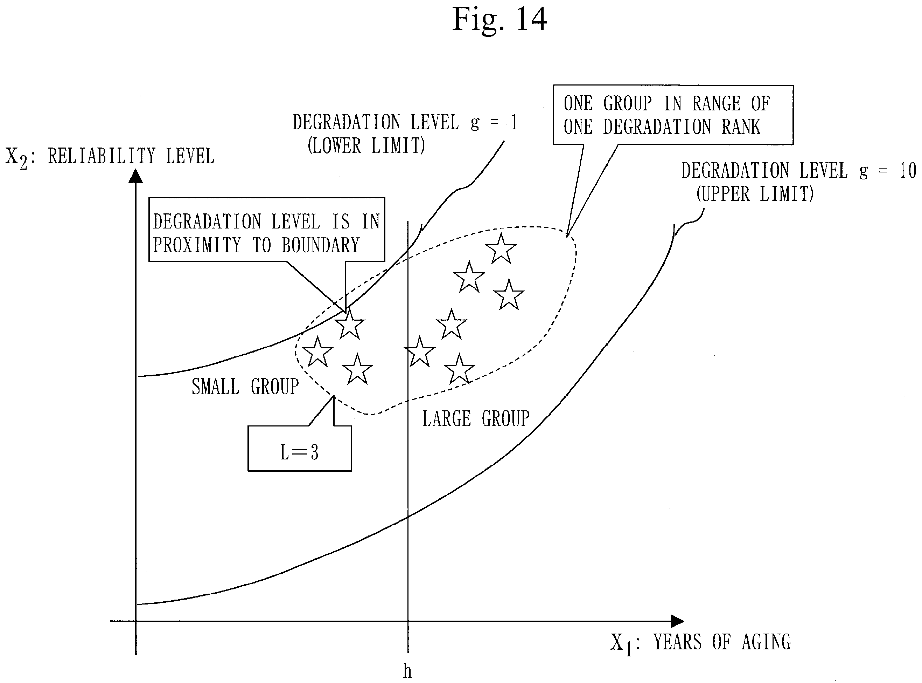

Fig. 14 illustrates division by a plane (perpendicular to the paper surface). In Fig. 14, a certain constant h is selected, and a plane for division is a set of points with $X_1 = h$. A number L of pieces of raw data of the small group is assumed to be constant. In Fig. 14, L = 3 holds.

# EP 4 343 639 B1

(Step S502: Rectangular Division of Small Group)

The summary generating unit 121 divides a small group of raw data with L = 3 into a plurality of rectangles. Details of this step S502 is described further below.

(Step S503: Division End Determination)

The summary generating unit 121 determines whether the number of pieces of raw data in a large group is equal to or smaller than L. When the determination result is YES, the process proceeds to step S504. When the determination result is NO, the process proceeds to step S505.

(Step S504: Rectangular Division of Large Group)

The summary generating unit 121 divides a large group with the number of pieces of raw data equal to or smaller than L into rectangles by a method similar to that in step S502. Step S402 ends.

(Step S505: Reduction of Group)

The summary generating unit 121 sets a large group as a new group, and returns the process to step S501. With the above, one group belonging to one degradation rank as illustrated in Fig. 14, that is, the plurality of raw data, is divided into a plurality of rectangles formed of pieces of raw data the number of which is equal to or smaller than the certain constant L.

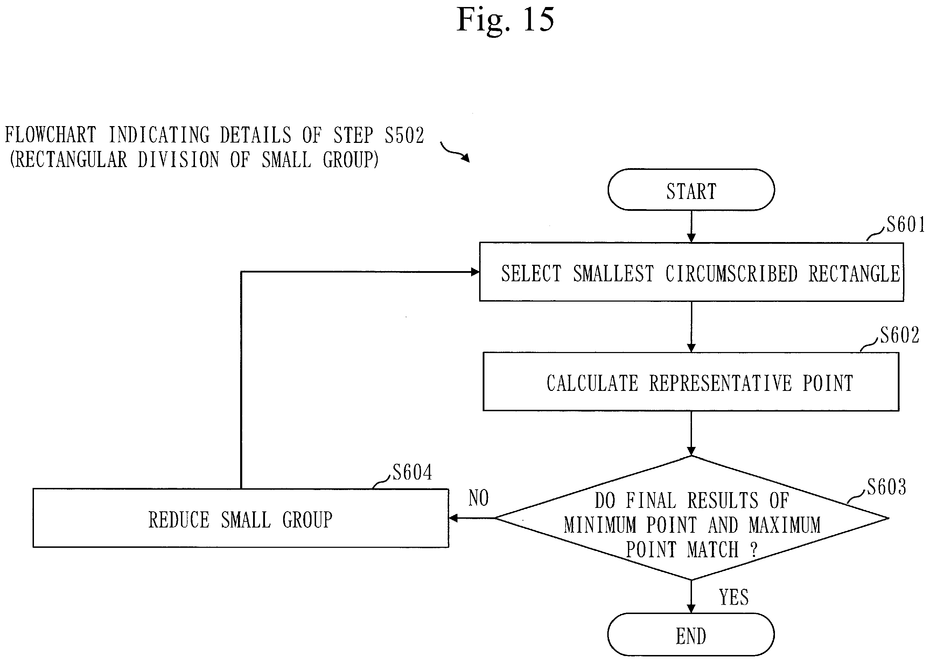

Fig. 15 is a flowchart illustrating operation of step S502. With reference to Fig. 15, details of step S502 are described.

(Step S601: Selection of Smallest Circumscribed Rectangle)

The summary generating unit 121 selects the smallest rectangle (hereinafter, smallest circumscribed rectangle) so that rectangle includes a small group formed of pieces of raw data the number of which is equal to or smaller than L.

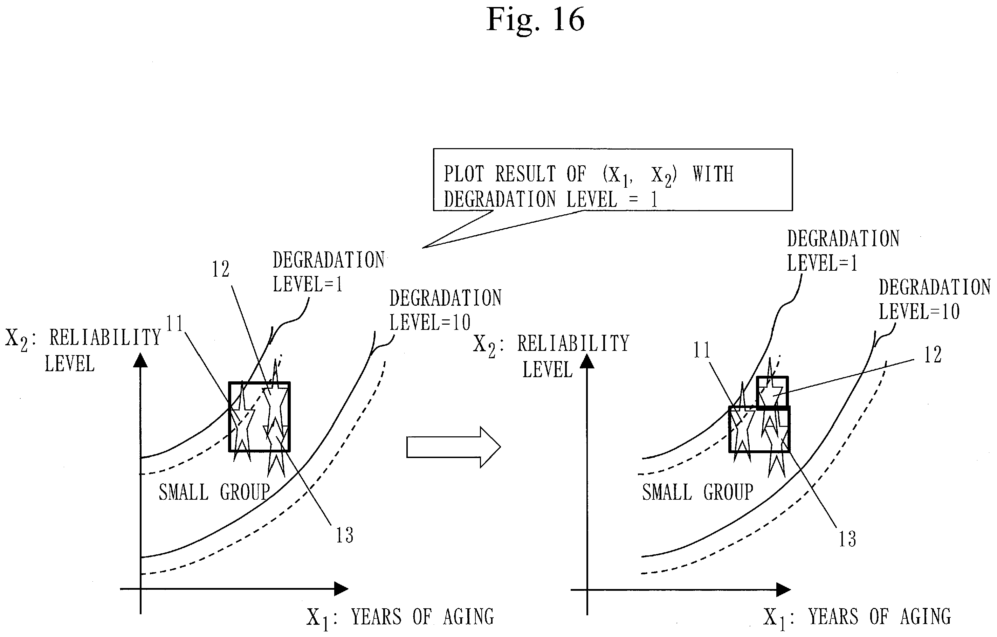

Fig. 16 illustrates rectangular division of small groups in the analytical process definition 201 illustrated in Fig. 3. The smallest circumscribed rectangle is illustrated on a left side in Fig. 16.

(Step S602: Calculation of Representative Point)

As described in Fig. 5, the degradation level g as the interim result exhibits a monotonical increase or monotonical decrease regarding the same data item of the plurality of pieces of raw data. The summary generating unit 121 divides the plurality of pieces of raw data into a plurality of regions, and sets numerical value data which causes the interim result to become a minimum value irrespective of the value of the parameter in the region and numerical value data which causes the interim result to become a maximum value irrespective of the value of the parameter in the region as representative data of the region. While an example of the region to be plurally divided by the summary generating unit 121 is a rectangle, the region is not restricted to the rectangle. Specifically, description is made as follows.

By using monotonicity of the interim result, the summary generating unit 121 acquires a minimum point and a maximum point of the degradation level g in the smallest circumscribed rectangle from end points of the smallest circumscribed rectangle. On the left side in Fig. 16, the minimum point of the degradation level g is an upper-left end point 11 of the smallest circumscribed rectangle, and the maximum point of the degradation level g is a lower-right end point 13 in the smallest circumscribed rectangle.

(Step S603: End Determination)

For the end point 11 of the minimum point of the degradation level g and the end point 13 of the maximum point of the degradation level g found at step S602, the summary generating unit 121 calculates the final results (degradation ranks), and determines whether the final results of the degradation ranks of the minimum point 11 and the maximum point 13 by using the new parameter $p_1$ match. When the final results of the degradation ranks of the minimum point 11 and the maximum point 13 match, step S502 ends. When the final results of the degradation ranks of the minimum point 11 and the maximum point 13 do not match, the process proceeds to step S604. On the left side in Fig. 16, the minimum point 11 belongs to degradation rank 1 and the maximum point belongs to degradation rank 2, and therefore the determination result is NO.

(Step S604: Reduction of Small Group)

As the right side in Fig. 16, as for the small group, the summary generating unit 121 takes a point 12 in which the interim result (degradation level g) is in most proximity to the lower limit or upper limit of the stage (degradation rank) as one rectangle, and takes a representative point of a rectangle formed of one point 11 as its one point. Also, a group formed of points other than the point of that rectangle (rectangle including the point 12) is taken as a new small group, and the process returns to step S601. In the example on the right side in Fig. 16, since the upper-right point 12 is in most proximity to the lower limit or upper limit of the stage, this point 12 is taken as a rectangle formed of one point, and a group formed of other points is taken as a new small group. By the above-described steps S601 to S604, it is possible to narrow down to a rectangle in which the final results (degradation ranks) of the minimum point and the maximum point match.

***Description Regarding Effects of Embodiment 1***

In Embodiment 1, it is often the case that, for most raw data, the final results do not change even if a parameter is changed. The reason for this is that the final result (degradation rank) is determined stepwise and the interim result (degradation level g) is often changed only slightly even if a parameter is changed. The interim result is often changed only slightly even if a parameter is changed because of the following. In analysis of the degradation rank of a facility, the degradation level has continuity with respect to the parameter, and the change range of the parameter is often small. Continuity is a property in which when the change range of the parameter is small, the change range of the interim result is also small. In addition, since the interim result (degradation level g) has monotonicity, the upper limit and the lower limit of the analytical results (degradation ranks) of the entire raw data in each rectangle can be grasped from the analytical results of the minimum points and the maximum points of the rectangle.

Since "the number of rectangles is smaller than the number of pieces of raw data", raw data requiring re-execution with the parameter after change can be extracted with a small amount of calculation. With this, it is possible to obtain an effect of being able to reduce analytical process time even if the changed parameter has not been calculated in the past.

In Embodiment 1, as illustrated in the operation at step S402, by following proximity between the interim result (degradation level g) in the analytical process executed last and the lower limit (g = 1) or upper limit (g = 10) of the stage (degradation rank), the entire raw data is divided into rectangles. This decreases the number of rectangles including a point in which the interim result (degradation level g) is in proximity to the lower limit or upper limit of the stage (degradation rank).

The point in which the interim result (degradation level) is in proximity to the lower limit or upper limit of the stage (degradation rank) has a high possibility that the final result changes with parameter change. Thus, with the operation at step S402, it is possible to obtain an effect of reducing the number of rectangles requiring re-execution at the time of parameter change.

Embodiment 2.

In Embodiment 2, points different from Embodiment 1 or points added thereto are mainly described. In the present embodiment, a basic screen processing method of the information search method of the data analysis apparatus 100 described in Embodiment 1 is described in detail. Functions and structures similar to those of the data analysis apparatus 100 of Embodiment 1 are provided with the same reference characters and description of these functions and structures are omitted.

In Embodiment 2, the change of the interim result of the same data item of the plurality of pieces of raw data indicates a value equal to or smaller than a constant value when the change of the numerical value data of the same data item of the plurality of pieces of raw data has a value equal to or smaller than a constant value. The summary generating unit 121 of Embodiment 2 divides the plurality of pieces of raw data into a plurality of regions, and sets a center point of each region as representative data. An example of the region is a rectangle, as with Embodiment 1. As the center point of the region, the barycenter of a figure representing the region can be used. Specifically, description is made as follows.

In Embodiment 2, as the analytical characteristic 110A, in place of monotonicity of the interim result g in Embodiment 1, a property is utilized in which, when the change of raw data is equal to or smaller than a constant value (hereinafter, C value), the change of the interim result g is also equal to or smaller than a constant value (hereinafter, D value).

This property is specifically represented in a mathematical expression as the following <Mathematical Expression 1>.

<Mathematical Expression 1>

Certain positive real numbers C and D are present, and for a set of any point $(a_1, a_2, ..., a_M)$ and a parameter $(q_1, ..., q_N)$, $|g(x_1, x_2, ..., x_M, p_1, ..., p_N) - g(a_1, a_2, ..., a_M, q_1, ..., q_N)| \leq D$

(each of $(x_1, x_2, ..., x_M)$ and $(p_1, ..., p_N)$ is any point satisfying $\max\{|x_i - a_i| \,|\, i = 1, 2, ..., M\} \leq C$, $\max\{|p_i - q_i| \,|\, i = 1, 2, ..., M\} \leq C$)

In <Mathematical Expression 1>, mathematical expressions

$$\max\{|xi\text{-}ai|\,\big|\,i = 1, 2, \ldots, M\} \leq C,$$

$$\max\{|pi\text{-}qi|\,\big|\,i = 1, 2, \ldots, M\} \leq C$$

mean that a change of raw data is equal to or smaller than C. a mathematical expression

$$|g(x1, x2, \ldots, xM, p1, \ldots, pN)\text{-}g(a1, a2, \ldots, aM, q1, \ldots, qN)|$$

$$\leq D$$

means that a change of the interim result g is equal to or smaller than D.

In Embodiment 2, as the analytical characteristic 110A, the above-described property of Mathematical Expression 1 regarding the interim result and the above-described C value and D value are stored. In Embodiment 2, as with Embodiment 1, the entire raw data is divided into rectangles, but a width from the center of each rectangle is set to be equal to or smaller than C.

In < Mathematical Expression 1> described above, the rectangle is a set

$$\{(x1, x2, \ldots, xM)|\max\{|xi\text{-}ai|\,\big|\,i = 1, 2, \ldots, M\} \leq C\},$$

and the center of the rectangle is a point (a1, a2, ..., aM).

Furthermore, as the representative point of the group, the center of the rectangle is stored as one piece of information in the summary information 121A.

In Embodiment 2, when whether re-execution is required for each group is determined, the interim result is calculated with the parameter after change and, by using Mathematical Expression 1 described above, it is determined whether the final results of the entire data in the rectangle become the same.

From Embodiment 2, even if the interim result does not have monotonicity, much raw data not requiring re-execution can be extracted with a small amount of calculation.

(Hardware Structure of Data Analysis Apparatus 100)

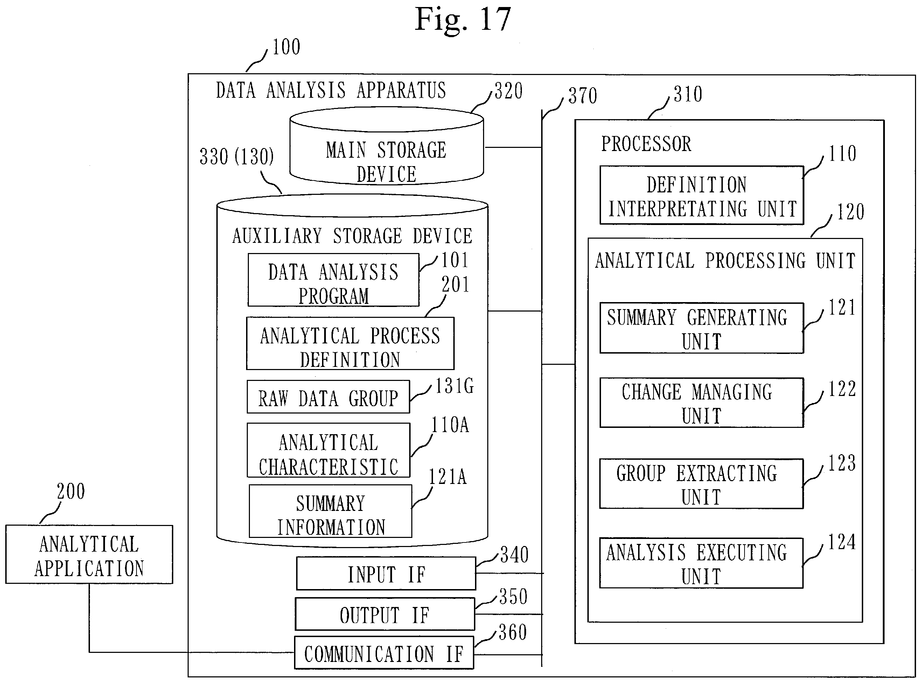

The hardware structure of the data analysis apparatus 100 of Embodiments 1 and 2 is described with reference to Fig. 17.

Fig. 17 illustrates the hardware structure of the data analysis apparatus 100. The hardware structure of the data analysis apparatus 100 is described with reference to Fig. 17.

The data analysis apparatus 100 is a computer. The data analysis apparatus 100 includes a processor 310. The data analysis apparatus 100 includes, in addition to the processor 310, other hardware such as a main storage device 320, an auxiliary storage device 330, an input IF 340, an output IF 350, and a communication IF 360. The processor 310 is connected via a signal line 370 to the other hardware to control the other hardware. IF represents an interface.

The data analysis apparatus 100 includes the definition interpreting unit 110 and the analytical processing unit 120 as functional components. The analytical processing unit 120 includes the summary generating unit 121, the change managing unit 122, the group extracting unit 123, and the analysis executing unit 124. The functions of the definition interpreting unit 110 and the analytical processing unit 120 are implemented by the data analysis program 101.

The processor 310 is a device which executes the data analysis program 101. The data analysis program 101 is a program which achieves the functions of the definition interpreting unit 110 and the analytical processing unit 120. The processor 310 is an IC (Integrated Circuit) which performs arithmetic processing. Specific examples of the processor 310 are a CPU (Central Processing Unit), DSP (Digital Signal Processor), and GPU (Graphics Processing Unit). The processor 310 is included in circuitry.

The main storage device 320 is a storage device. Specific examples of the main storage device 320 are an SRAM (Static Random Access Memory) and DRAM (Dynamic Random Access Memory). The main storage device 320 retains the arithmetic operation result of the processor 310. The data storage unit 130 is implemented by the main storage device 320.

The auxiliary storage device 330 is a storage device which nonvoluntarily stores data. A specific example of the auxiliary storage device 330 is an HDD (Hard Disk Drive). Also, the auxiliary storage device 330 may be a portable recording medium such as an SD (registered trademark) (Secure Digital) memory card, NAND flash, flexible disk, optical disk, compact disk, Blu-ray (registered trademark) disc, or DVD (Digital Versatile Disk). The data storage unit 130 is implemented by the auxiliary storage device 330. The auxiliary storage device 330 has the data analysis program 101 stored therein.

The input IF 340 is a port to which data is inputted from each device. The output IF 350 is a port to which various devices are connected and from which data is outputted by the processor 310 to various devices. The communication IF 360 is a communication port for the processor 310 to communicate with another device. To the communication IF 360, the analytical application 200 is connected.

The processor 310 loads the data analysis program 101 from the auxiliary storage device 330 into the main storage device 320, and reads and executes the data analysis program 101 from the main storage device 320. In the main storage device 320, not only the data analysis program 101 but also an OS (Operating System) are stored. While executing the OS, the processor 310 executes the data analysis program 101. The data analysis apparatus 100 may include a plurality of processors replacing the processor 310. The plurality of these processors share execution of the data analysis program 101. Each of the processors is, as with the processor 310, a device which executes the data analysis program 101. Data, information, signal values, and variable values to be used, processed, or outputted by the data analysis program 101 are stored in the main storage device 320, the auxiliary storage device 330, or a register or cache memory in the processor 310.

The data analysis program 101 is a program which causes a computer to execute each process, each procedure, or each step obtained by reading "unit" of the definition interpreting unit 110 and the analytical processing unit 120 as "process", "procedure", or "step".

Also, the data analysis method is a method to be performed by the data analysis apparatus 100 as a computer executing the data analysis program 101. The data analysis program 101 may be provided as stored in a computer-readable recording medium or may be provided as a program product.

**Reference Signs List**

11, 12, 13: point; 100: data analysis apparatus; 110: definition interpreting unit; 110A: analytical characteristic; 120: analytical processing unit; 121: summary generating unit; 121A: summary information; 122: change managing unit; 123: group extracting unit; 124: analysis executing unit; 130: data storage unit; 131G: raw data group; 200: analytical application; 201: analytical process definition; 202: analysis instruction; 310: processor; 320: main storage device; 330: auxiliary storage device; 340: input IF; 350: output IF; 360: communication IF

**Claims**

1. A data analysis apparatus (100) comprising:

   an extracting unit (123), by using summary information, which is information about a degradation rank of a facility as a final result of evaluation of the facility as an evaluation target determined stepwise from a degradation level as an interim result of evaluation of the evaluation target calculated by using raw data indicating an attribute of the evaluation target and a parameter, is a set of a plurality of interim results with same said final result, the raw data being organized into groups based on the final result, and is information having, as representative data, each piece of raw data as a source of calculation of two interim results among the plurality of interim results, to extract, when the parameter is changed, an evaluation target requiring recalculation of the interim result from respective evaluation targets corresponding to the plurality of interim results included in the summary information; and
   a calculating unit (124) to recalculate an interim result of the evaluation target extracted by the extracting unit (123) by using raw data of the extracted evaluation target and the parameter after change, **characterized in that** the summary information is a set of one or more said interim results, and
   the extracting unit (123), by using the representative data and the parameter after change, calculates one or more interim results of said evaluation targets having the representative data for each group, determines final results of the one or more interim results calculated and, when the determined one or more final results match for a specific group, extracts each evaluation target corresponding to the one or more interim results included in the specific group of the summary information as an evaluation target not requiring recalculation of the interim result.

2. The data analysis apparatus (100) according to claim 1, further comprising:
   a summary generating unit (121) to generate new summary information different from the summary information when the interim result of the evaluation target is calculated by the calculating unit (124).

3. The data analysis apparatus (100) according to claim 2, wherein

the summary generating unit (121) generates the summary information for each of a plurality of said final results, and
the extracting unit (123) extracts an evaluation target requiring recalculation of the interim result by using each piece of the summary information generated for each of said final results.

4. The data analysis apparatus (100) according to claim 3, wherein
the summary generating unit (121) generates the summary information according to either proximity between the interim result of the evaluation target and a lower limit of a stage of determining the final result of evaluation of the evaluation target or proximity between the interim result of the evaluation target and an upper limit of the stage of determining the final result of evaluation of the evaluation target.

5. The data analysis apparatus (100) according to claim 3, wherein

the raw data is formed of data items of one or more pieces of numerical value data,
the interim result exhibits a monotonical increase or monotonical decrease regarding same said data item of a plurality of pieces of said raw data, and
the summary generating unit (121) divides the plurality of pieces of raw data into a plurality of regions, and sets a piece of the numerical value data which causes the interim result to become a minimum value irrespective of a value of the parameter in the region and a piece of the numerical value data which causes the interim result to become a maximum value irrespective of the value of the parameter in the region as the representative data of the region.

6. The data analysis apparatus (100) according to claim 3, wherein

the raw data is formed of data items of one or more pieces of numerical value data,
a change of an interim result of a same said data item of a plurality of pieces of said raw data indicates a value equal to or smaller than a constant value when a change of the numerical value data of the same data item of the plurality of pieces of raw data has a value equal to or smaller than a constant value, and
the summary generating unit (121) divides the plurality of pieces of raw data into a plurality of regions, and sets a center point of each said region as the representative data.

7. A data analysis method comprising:

extracting, by a computer, by using summary information, which is information about a degradation rank of a facility as a final result of evaluation of the facility as an evaluation target determined stepwise from a degradation level as an interim result of evaluation of the evaluation target calculated by using raw data indicating an attribute of the evaluation target and a parameter, is a set of a plurality of interim results with same said final result, the raw data being organized into groups based on the final result, and is information having, as representative data, each piece of raw data as a source of calculation of two interim results among the plurality of interim results, when the parameter is changed, an evaluation target requiring recalculation of the interim result from respective evaluation targets corresponding to the plurality of interim results included in the summary information; and
recalculating, by the computer, an interim result of the extracted evaluation target by using raw data of the extracted evaluation target and the parameter after change, **characterized in that**:

the summary information is a set of one or more said interim results, and
the extracting step includes, by using the representative data and the parameter after change, calculating one or more interim results of said evaluation targets having the representative data for each group, determining final results of the one or more interim results calculated and, when the determined one or more final results match for a specific group, extracting each evaluation target corresponding to the one or more interim results included in the specific group of the summary information as an evaluation target not requiring recalculation of the interim result.

8. A data analysis program comprising instructions which, when the program is executed by a computer, cause the computer to execute the method according to claim 7.

**Patentansprüche**

1.  Datenanalysevorrichtung (100), umfassend:

    eine Extraktionseinheit (123) zum, unter Verwendung von Zusammenfassungsinformationen, die Informationen über einen Verschlechterungsgrad einer Einrichtung als Endergebnis einer Evaluierung der Einrichtung als Evaluierungsziel sind, das schrittweise aus einem Verschlechterungsniveau als Zwischenergebnis einer Evaluierung des Evaluierungsziels bestimmt wird, das unter Verwendung von Rohdaten berechnet wird, die ein Attribut des Evaluierungsziels und einen Parameter angeben, ein Satz aus einer Vielzahl von Zwischenergebnissen mit demselben Endergebnis sind, wobei die Rohdaten auf der Grundlage des Endergebnisses in Gruppen organisiert sind und Informationen sind, die als repräsentative Daten jedes Stück Rohdaten als Quelle der Berechnung von zwei Zwischenergebnissen aus der Vielzahl von Zwischenergebnissen aufweisen, Extrahieren, wenn der Parameter geändert wird, eines Evaluierungsziels, das eine Neuberechnung des Zwischenergebnisses aus jeweiligen Evaluierungszielen erfordert, die der Vielzahl von Zwischenergebnissen entsprechen, die in den Zusammenfassungsinformationen enthalten sind; und
    eine Berechnungseinheit (124) zum Neuberechnen eines Zwischenergebnisses des durch die Extraktionseinheit (123) extrahierten Evaluierungsziels unter Verwendung von Rohdaten des extrahierten Evaluierungsziels und des Parameters nach der Änderung, **dadurch gekennzeichnet, dass**
    die Zusammenfassungsinformationen ein Satz von einem oder mehreren Zwischenergebnissen sind, und
    die Extraktionseinheit (123) unter Verwendung der repräsentativen Daten und des Parameters nach der Änderung eines oder mehrere Zwischenergebnisse der Evaluierungsziele mit den repräsentativen Daten für jede Gruppe berechnet, Endergebnisse des einen oder der mehreren berechneten Zwischenergebnisse bestimmt und, wenn das bestimmte eine oder die mehreren Endergebnisse für eine spezifische Gruppe übereinstimmen, jedes Evaluierungsziel, das dem einen oder den mehreren Zwischenergebnissen entspricht, die in der spezifischen Gruppe der Zusammenfassungsinformationen enthalten sind, als ein Evaluierungsziel extrahiert, das keine Neuberechnung des Zwischenergebnisses erfordert.

2.  Datenanalysevorrichtung (100) nach Anspruch 1, ferner umfassend:
    eine Zusammenfassung-Erzeugungseinheit (121) zum Erzeugen neuer Zusammenfassungsinformationen, die sich von den Zusammenfassungsinformationen unterscheiden, wenn das Zwischenergebnis des Evaluierungsziels von der Berechnungseinheit (124) berechnet wird.

3.  Datenanalysevorrichtung (100) nach Anspruch 2, wobei

    die Zusammenfassung-Erzeugungseinheit (121) die Zusammenfassungsinformationen für jedes einer Vielzahl der Endergebnisse erzeugt, und
    die Extraktionseinheit (123) ein Evaluierungsziel extrahiert, das eine Neuberechnung des Zwischenergebnisses erfordert, indem jedes Stück der Zusammenfassungsinformationen verwendet wird, die für jedes der Endergebnisse erzeugt werden.

4.  Datenanalysevorrichtung (100) nach Anspruch 3, wobei
    die Zusammenfassung-Erzeugungseinheit (121) die Zusammenfassungsinformationen entweder entsprechend der Nähe zwischen dem Zwischenergebnis des Evaluierungsziels und einer unteren Grenze einer Stufe der Bestimmung des Endergebnisses der Evaluierung des Evaluierungsziels oder der Nähe zwischen dem Zwischenergebnis des Evaluierungsziels und einer oberen Grenze der Stufe der Bestimmung des Endergebnisses der Evaluierung des Evaluierungsziels erzeugt.

5.  Datenanalysevorrichtung (100) nach Anspruch 3, wobei

    die Rohdaten aus Datenelementen aus einem oder mehreren Stücken numerischer Wertdaten gebildet werden, das Zwischenergebnis einen monotonen Anstieg oder eine monotone Abnahme in Bezug auf dasselbe Datenelement einer Vielzahl von Stücken der Rohdaten aufweist, und
    die Zusammenfassung-Erzeugungseinheit (121) die Vielzahl von Stücken von Rohdaten in eine Vielzahl von Regionen aufteilt und ein Stück der numerischen Wertdaten, das bewirkt, dass das Zwischenergebnis unabhängig von einem Wert des Parameters in der Region zu einem Minimalwert wird, und ein Stück der numerischen Wertdaten, das bewirkt, dass das Zwischenergebnis unabhängig von dem Wert des Parameters in der Region zu einem Maximalwert wird, als die repräsentativen Daten der Region einstellt.

6. Datenanalysevorrichtung (100) nach Anspruch 3, wobei

die Rohdaten aus Datenelementen aus einem oder mehreren Stücken numerischer Wertdaten gebildet werden, eine Änderung eines Zwischenergebnisses desselben Datenelements aus einer Vielzahl von Teilen der Rohdaten einen Wert angibt, der gleich wie oder kleiner als ein konstanter Wert ist, wenn eine Änderung der numerischen Wertdaten desselben Datenelements der Vielzahl von Stücken von Rohdaten einen Wert aufweist, der gleich wie oder kleiner als ein konstanter Wert ist, und
die Zusammenfassung-Erzeugungseinheit (121) die Vielzahl von Stücken von Rohdaten in eine Vielzahl von Regionen aufteilt und einen Mittelpunkt jeder Region als die repräsentativen Daten einstellt.

7. Datenanalyseverfahren, umfassend:

Extrahieren, durch einen Computer, unter Verwendung von Zusammenfassungsinformationen, die Informationen über einen Verschlechterungsgrad einer Einrichtung als Endergebnis einer Evaluierung der Einrichtung als Evaluierungsziel sind, das schrittweise aus einem Verschlechterungsniveau als Zwischenergebnis einer Evaluierung des Evaluierungsziels bestimmt wird, das unter Verwendung von Rohdaten berechnet wird, die ein Attribut des Evaluierungsziels und einen Parameter angeben, die ein Satz aus einer Vielzahl von Zwischenergebnissen mit demselben Endergebnis sind, wobei die Rohdaten auf der Grundlage des Endergebnisses in Gruppen organisiert sind und Informationen sind, die als repräsentative Daten jedes Stück Rohdaten als Quelle der Berechnung von zwei Zwischenergebnissen aus der Vielzahl von Zwischenergebnissen aufweisen, wenn der Parameter geändert wird, eines Evaluierungsziels, das eine Neuberechnung des Zwischenergebnisses aus jeweiligen Evaluierungszielen erfordert, die der Vielzahl von Zwischenergebnissen entsprechen, die in den Zusammenfassungsinformationen enthalten sind; und
Neuberechnen, durch einen Computer, eines Zwischenergebnisses des extrahierten Evaluierungsziels unter Verwendung von Rohdaten des extrahierten Evaluierungsziels und des Parameters nach der Änderung, **dadurch gekennzeichnet, dass**:

die Zusammenfassungsinformationen ein Satz von einem oder mehreren Zwischenergebnissen sind, und der Extraktionsschritt unter Verwendung der repräsentativen Daten und des Parameters nach der Änderung aufweist: Berechnen eines oder mehrerer Zwischenergebnisse der Evaluierungsziele mit den repräsentativen Daten für jede Gruppe, Bestimmen der Endergebnisse des einen oder der mehreren berechneten Zwischenergebnisse und, wenn das bestimmte eine oder die mehreren Endergebnisse für eine spezifische Gruppe übereinstimmen, Extrahieren jedes Evaluierungsziels, das dem einen oder den mehreren Zwischenergebnissen entspricht, die in der spezifischen Gruppe der Zusammenfassungsinformationen enthalten sind, als ein Evaluierungsziel, das keine Neuberechnung des Zwischenergebnisses erfordert.

8. Datenanalyseprogramm, umfassend Anweisungen, die, wenn das Programm durch einen Computer ausgeführt wird, den Computer veranlassen, das Verfahren nach Anspruch 7 auszuführen.

**Revendications**

1. Appareil d'analyse de données (100), comprenant :

une unité d'extraction (123), en utilisant des informations de résumé, qui sont des informations sur un rang de dégradation d'une installation en tant que résultat final d'une évaluation de l'installation en tant que cible d'évaluation déterminée par étapes à partir d'un niveau de dégradation en tant que résultat intermédiaire de l'évaluation de la cible d'évaluation calculé en utilisant des données brutes indiquant un attribut de la cible d'évaluation et un paramètre, sont un ensemble d'une pluralité de résultats intermédiaires avec le même résultat final, les données brutes étant organisées en groupes sur la base du résultat final, et sont des informations ayant, en tant que données représentatives, chaque pièce de données brutes comme source de calcul de deux résultats intermédiaires parmi la pluralité de résultats intermédiaires, pour extraire, lorsque le paramètre est modifié, une cible d'évaluation nécessitant un recalcul du résultat intermédiaire à partir des cibles d'évaluation respectives correspondant à la pluralité de résultats intermédiaires inclus dans les informations de résumé ; et
une unité de calcul (124) pour recalculer un résultat intermédiaire de la cible d'évaluation extraite par l'unité d'extraction (123) en utilisant des données brutes de la cible d'évaluation extraite et le paramètre après changement, **caractérisé en ce que** :

les informations de résumé sont un ensemble d'un ou plusieurs desdits résultats intermédiaires, et
l'unité d'extraction (123), en utilisant les données représentatives et le paramètre après changement, calcule un ou plusieurs résultats intermédiaires desdites cibles d'évaluation ayant les données représentatives pour chaque groupe, détermine les résultats finaux des un ou plusieurs résultats intermédiaires calculés et, lorsque les un ou plusieurs résultats finaux déterminés correspondent à un groupe spécifique, extrait chaque cible d'évaluation correspondant aux un ou plusieurs résultats intermédiaires inclus dans le groupe spécifique des informations de résumé en tant que cible d'évaluation ne nécessitant pas de recalcul du résultat intermédiaire.

2.  Appareil d'analyse de données (100) selon la revendication 1, comprenant en outre :
une unité de génération de résumé (121) pour générer de nouvelles informations de résumé différentes des informations de résumé lorsque le résultat intermédiaire de la cible d'évaluation est calculé par l'unité de calcul (124).

3.  Appareil d'analyse de données (100) selon la revendication 2, dans lequel

l'unité de génération de résumé (121) génère les informations de résumé pour chacun d'une pluralité desdits résultats finaux, et
l'unité d'extraction (123) extrait une cible d'évaluation nécessitant un recalcul du résultat intermédiaire en utilisant chaque pièces des informations de résumé générées pour chacun desdits résultats finaux.

4.  Appareil d'analyse de données (100) selon la revendication 3, dans lequel
l'unité de génération de résumé (121) génère les informations de résumé selon soit la proximité entre le résultat intermédiaire de la cible d'évaluation et une limite inférieure d'une étape de détermination du résultat final de l'évaluation de la cible d'évaluation, soit la proximité entre le résultat intermédiaire de la cible d'évaluation et une limite supérieure de l'étape de détermination du résultat final de l'évaluation de la cible d'évaluation.

5.  Appareil d'analyse de données (100) selon la revendication 3, dans lequel

les données brutes sont formées d'éléments de données d'une ou plusieurs pièces de données de valeur numérique,
le résultat intermédiaire présente une augmentation monotone ou une diminution monotone par rapport audit élément de données d'une pluralité de pièces desdites données brutes, et
l'unité de génération de résumé (121) divise la pluralité de pièces de données brutes en une pluralité de régions, et définit une pièce des données de valeur numérique qui amène le résultat intermédiaire à devenir une valeur minimale indépendamment d'une valeur du paramètre dans la région, et une pièce des données de valeur numérique qui amène le résultat intermédiaire à devenir une valeur maximale indépendamment de la valeur du paramètre dans la région en tant que données représentatives de la région.

6.  Appareil d'analyse de données (100) selon la revendication 3, dans lequel

les données brutes sont formées d'éléments de données d'une ou plusieurs pièces de données de valeur numérique,
un changement d'un résultat intermédiaire d'un même dit élément de données d'une pluralité de pièces desdites données brutes indique une valeur égale ou inférieure à une valeur constante lorsqu'un changement des données de valeur numérique du même élément de données de la pluralité de pièces de données brutes présente une valeur égale ou inférieure à une valeur constante, et
l'unité de génération de résumé (121) divise la pluralité de pièces de données brutes en une pluralité de régions, et définit un point central de chacune desdites régions en tant que données représentatives.

7.  Procédé d'analyse de données, comprenant les étapes consistant à :

extraire, par l'intermédiaire d'un ordinateur, en utilisant des informations de résumé, qui sont des informations sur un rang de dégradation d'une installation en tant que résultat final d'une évaluation de l'installation en tant que cible d'évaluation déterminée par étapes à partir d'un niveau de dégradation en tant que résultat intermédiaire de l'évaluation de la cible d'évaluation calculé en utilisant des données brutes indiquant un attribut de la cible d'évaluation et un paramètre, sont un ensemble d'une pluralité de résultats intermédiaires avec le même résultat final, les données brutes étant organisées en groupes sur la base du résultat final, et sont des informations ayant, en tant que données représentatives, chaque pièce de données brutes comme source de calcul de deux résultats

17

intermédiaires parmi la pluralité de résultats intermédiaires, lorsque le paramètre est modifié, une cible d'évaluation nécessitant un recalcul du résultat intermédiaire à partir des cibles d'évaluation respectives correspondant à la pluralité de résultats intermédiaires inclus dans les informations de résumé ; et

recalculer, par l'intermédiaire de l'ordinateur, un résultat intermédiaire de la cible d'évaluation extraite en utilisant les données brutes de la cible d'évaluation extraite et le paramètre après changement, **caractérisé en ce que** :

les informations de résumé sont un ensemble d'un ou plusieurs desdits résultats intermédiaires, et l'étape d'extraction comprend les étapes consistant à, en utilisant les données représentatives et le paramètre après changement, calculer un ou plusieurs résultats intermédiaires desdites cibles d'évaluation ayant les données représentatives pour chaque groupe, déterminer les résultats finaux des un ou plusieurs résultats intermédiaires calculés et, lorsque les un ou plusieurs résultats finaux déterminés correspondent à un groupe spécifique, extraire chaque cible d'évaluation correspondant aux un ou plusieurs résultats intermédiaires inclus dans le groupe spécifique des informations de résumé en tant que cible d'évaluation ne nécessitant pas de recalcul du résultat intermédiaire.

8. Programme d'analyse de données comprenant des instructions qui, lorsque le programme est exécuté par un ordinateur, amènent l'ordinateur à exécuter le procédé selon la revendication 7.

## Fig. 1

# Fig. 2

131G:RAW DATA GROUP

| FACILITY ID | YEARS OF AGING $(x_1)$ | RELIABILITY LEVEL $(x_2)$ |
|---|---|---|
| FACILITY 1 | 40 | 0. 8 |
| FACILITY 2 | 50 | 0. 9 |
| ・ ・ ・ | ・ ・ ・ | ・ ・ ・ |

EP 4 343 639 B1

# Fig. 3

FINAL RESULT OF ANALYTICAL PROCESS

$$z=f\,(g\,(x_1,\ x_2,\ \ p_1{=}0.\,9)\,)$$

PARAMETER

SET OF WHOLE RAW DATA

ANALYTICAL PROCESS DEFINITION 201

f : DEGRADATION RANK f DETERMINED STEPWISE

$$f\,(y) = \begin{cases} 1 & (y{<}1) \\ 2 & (1{\leq}y{<}10) \\ 3 & (10{\leq}y) \end{cases}$$

g : MONOTONICALLY-CHANGING DEGRADATION LEVEL

$$y= g\,(x_1,\ x_2,\ \ p_1)\ {=}x_1{+}\ \frac{p_1}{x_2}$$

$X_2$ : RELIABILITY LEVEL
(g DECREASES)

$X_1$ : YEARS OF AGING
(g INCREASES)

$g\,(x_1,\ x_2,\ p_1)$

□ : RAW DATA ON EACH ROW OF
RAW DATA GROUP 131G

# Fig. 4

EP 4 343 639 B1

110A: ANALYTICAL CHARACTERISTIC

| FUNCTION NAME | PROPERTY | DETAILS |
|---|---|---|
| f | OUTPUT IS DETERMINED STEPWISE WITH RESPECT TO INPUT | 1 WHEN INPUT IS SMALLER THAN 1,<br>2 WHEN INPUT IS 1 OR LARGER AND SMALLER THAN 10,<br>3 WHEN INPUT IS 10 OR LARGER |
| g | MONOTONICAL INCREASE/MONOTONICAL DECREASE REGARDING EACH INPUT DATA ITEM | MONOTONICAL INCREASE REGARDING FIRST INPUT DATA ITEM<br>MONOTONICAL DECREASE REGARDING SECOND INPUT DATA ITEM |

# Fig. 5

LOWER LIMIT OF DEGRADATION RANK 2
(DEGRADATION LEVEL =1 WHEN p1=0.9)

UPPER LIMIT OF DEGRADATION RANK 2
(DEGRADATION LEVEL =10 WHEN p1=0.9)

$X_2$: RELIABILITY LEVEL

△ :DEGRADATION RANK 1
WHEN p1 = 0.9

☆ :DEGRADATION RANK 2
WHEN p1 = 0.9

○ :DEGRADATION RANK 3
WHEN p1 = 0.9

▲ ★ ◉ :MINIMUM POINT

▲ ★ ● :MAXIMUM POINT

RECTANGLE 1

RECTANGLE 2

DEGRADATION
RANK 1

RECTANGLE 3
RECTANGLE 4
RECTANGLE 5

DEGRADATION
RANK 2

RECTANGLE 6

DEGRADATION
RANK 3

$X_1$: YEARS
OF AGING

EP 4 343 639 B1

# Fig. 6

121A: SUMMARY INFORMATION

| GROUP | ANALYTICAL CHARACTERISTIC | REPRESENTATIVE POINT | RAW DATA (FACILITY ID) |
|---|---|---|---|
| RECTANGLE 1 | FINAL RESULT IS DETERMINED STEPWISE, AND INTERIM RESULT IS MONOTONICAL REGARDING EACH INPUT DATA ITEM | MINIMUM POINT : $(x_1, \quad x_2) = (40, 1. 1)$<br>MAXIMUM POINT : $(x_1, \quad x_2) = (50, 0. 9)$ | FACILITY 1, FACILITY 3, ... |
| RECTANGLE 2 | FINAL RESULT IS DETERMINED STEPWISE, AND INTERIM RESULT IS MONOTONICAL REGARDING EACH INPUT DATA ITEM | MINIMUM POINT : $(x_1, \quad x_2) = (30, 0. 8)$<br>MAXIMUM POINT : $(x_1, \quad x_2) = (45, 0. 7)$ | FACILITY 2, FACILITY 5, ... |
| . . . | . . . | . . . | . . . |

EP 4 343 639 B1

## Fig. 7

OPERATION OF ANALYTICAL PROCESS DEFINITION
BY DEFINITION INTERPRETING UNIT 110

```
            ┌─────────────┐
            │    START    │
            └─────────────┘
                   │
                   ▼
┌──────────────────────────────────────────┐  ╭S101
│ RECEIVE ANALYTICAL PROCESS DEFINITION 201 │
└──────────────────────────────────────────┘
                   │
                   ▼
┌──────────────────────────────────────────┐  ╭S102
│ INTERPRET ANALYTICAL PROCESS DEFINITION 201│
└──────────────────────────────────────────┘
                   │
                   ▼
┌──────────────────────────────────────────┐  ╭S103
│  STORE ANALYTICAL PROCESS DEFINITION 201  │
└──────────────────────────────────────────┘
                   │
                   ▼
            ┌─────────────┐
            │     END     │
            └─────────────┘
```

EP 4 343 639 B1

# Fig. 8

ENTIRE OPERATION OF EXECUTION OF
ANALYTICAL PROCESS

```
                    ( START )
                        │
                        ▼
┌──────────────────────────────────────────┐  S201
│       EXTRACT PARAMETER CHANGE DETAILS     │
│         (CHANGE MANAGING UNIT 122)         │
└──────────────────────────────────────────┘
                        │
                        ▼
┌──────────────────────────────────────────┐  S202
│     EXTRACT ANALYSIS TARGET DATA BY USING  │
│           SUMMARY INFORMATION 121A         │
│         (GROUP EXTRACTING UNIT 123)        │
└──────────────────────────────────────────┘
                        │
                        ▼
┌──────────────────────────────────────────┐  S203
│     EXECUTE ANALYTICAL PROCESS FOR FINDING │
│             DEGRADATION RANK               │
│        (ANALYSIS EXECUTING UNIT 124)       │
└──────────────────────────────────────────┘
                        │
                        ▼
┌──────────────────────────────────────────┐  S204
│    GENERATE NEW SUMMARY INFORMATION 121A   │
│        (SUMMARY GENERATING UNIT 121)       │
└──────────────────────────────────────────┘
                        │
                        ▼
                     ( END )
```

# Fig. 9

FLOWCHART OF DETAILS OF STEP S202

```
                                    ┌──────────────────┐
                                    │    S202 START    │
                                    └──────────────────┘
                                             │
                                             ▼
                                        ╱─────────╲  S301
                          NO          ╱  IS SUMMARY ╲
              ◄─────────────────────  ╲ INFORMATION 121A ╱
              │                        ╲  PRESENT ?  ╱
              │                          ╲─────────╱
              │                             │ YES
              │                             ▼
              │                        ╱─────────╲  S302
      ┌───────▼──────────────┐   NO  ╱     IS      ╲
      │ DETERMINE THAT WHOLE │◄───── ╲ ANALYTICAL CHARACTERISTIC 110A ╱
      │ RAW DATA ARE         │        ╲ AS PREMISE PRESENT ? ╱
      │ REQUIRED TO BE       │          ╲─────────╱
      │ RE-EXECUTED  S304    │             │ YES  S303
      └──────────┬───────────┘             ▼
                 │              ┌──────────────────────────┐
                 │              │ DETERMINE WHETHER         │
                 │              │ RE-EXECUTION IS REQUIRED  │
                 │              │ FOR EACH GROUP            │
                 │              └────────────┬─────────────┘
                 │                           │
                 └───────────────────────────┤
                                             ▼
                                    ┌──────────────────┐
                                    │    S202 END      │
                                    └──────────────────┘
```

EP 4 343 639 B1

# Fig. 10

LOWER LIMIT OF DEGRADATION RANK 2
(DEGRADATION LEVEL =1 WHEN p1=0. 9)

LOWER LIMIT OF DEGRADATION RANK 2
(DEGRADATION LEVEL =1 WHEN p1=0. 6)

UPPER LIMIT OF DEGRADATION RANK 2
(DEGRADATION LEVEL =10 WHEN p1=0. 9)

UPPER LIMIT OF DEGRADATION RANK 2
(DEGRADATION LEVEL =10 WHEN p1=0. 6)

$X_2$: RELIABILITY LEVEL

RECTANGLE 2

RECTANGLE 1

: RE-EXECUTION NOT REQUIRED

: RE-EXECUTION REQUIRED

DEGRADATION RANK 1

RECTANGLE 3
RECTANGLE 4

RECTANGLE 5

DEGRADATION RANK 2

RECTANGLE 6

DEGRADATION RANK 3

$X_1$: YEARS OF AGING

EP 4 343 639 B1

# Fig. 11

FLOWCHART INDICATING DETAILS OF STEP S204

```
            ┌─────────────┐
            │    START    │
            └─────────────┘
                   │
                   ▼
   ┌───────────────────────────────┐
   │      DIVIDE ENTIRE RAW DATA    │ ─ S401
   │      BASED ON FINAL RESULT     │
   └───────────────────────────────┘
                   │
                   ▼
   ┌───────────────────────────────┐
   │     DIVIDE EACH DIVISION RESULT│ ─ S402
   │        INTO RECTANGLES         │
   └───────────────────────────────┘
                   │
                   ▼
   ┌───────────────────────────────┐
   │    STORE SUMMARY INFORMATION   │ ─ S403
   └───────────────────────────────┘
                   │
                   ▼
            ┌─────────────┐
            │     END     │
            └─────────────┘
```

# Fig. 12

DEGRADATION LEVEL=1

$X_2$: RELIABILITY LEVEL

DEGRADATION LEVEL=10

DEGRADATION
RANK 1

DEGRADATION
RANK 2

DEGRADATION
RANK 3

$X_1$: YEARS OF AGING

EP 4 343 639 B1

# Fig. 13

FLOWCHART INDICATING DETAILS OF STEP
S402 (DIVISION INTO RECTANGLES)

START

S501
DIVIDE ONE GROUP BELONGING TO CERTAIN
DEGRADATION RANK BY PLANE

S502
DIVIDE SMALL GROUP (L = 3) INTO
PLURALITY OF RECTANGLES

S503
IS NUMBER OF PIECES OF RAW DATA
IN LARGE GROUP EQUAL TO OR
SMALLER THAN L ?

NO

S505
SET LARGE GROUP AS NEW GROUP

YES

S504
DIVIDE LARGE GROUP INTO RECTANGLES

END

EP 4 343 639 B1

# Fig. 14

ONE GROUP IN RANGE OF
ONE DEGRADATION RANK

DEGRADATION LEVEL g = 1
(LOWER LIMIT)

DEGRADATION LEVEL g = 10
(UPPER LIMIT)

X₂: RELIABILITY LEVEL

DEGRADATION LEVEL IS IN
PROXIMITY TO BOUNDARY

SMALL GROUP

LARGE GROUP

L=3

X₁: YEARS OF AGING

h

EP 4 343 639 B1

# Fig. 15

FLOWCHART INDICATING DETAILS OF STEP S502
(RECTANGULAR DIVISION OF SMALL GROUP)

START

S601
SELECT SMALLEST CIRCUMSCRIBED RECTANGLE

S602
CALCULATE REPRESENTATIVE POINT

S603
DO FINAL RESULTS OF MINIMUM POINT AND MAXIMUM POINT MATCH ?

NO

S604
REDUCE SMALL GROUP

YES

END

EP 4 343 639 B1

# Fig. 16

PLOT RESULT OF $(X_1, X_2)$ WITH DEGRADATION LEVEL = 1

$X_2$: RELIABILITY LEVEL

12

DEGRADATION LEVEL=1

11

DEGRADATION LEVEL=10

SMALL GROUP

13

$X_1$: YEARS OF AGING

$X_2$: RELIABILITY LEVEL

DEGRADATION LEVEL=1

DEGRADATION LEVEL=10

11

12

SMALL GROUP

13

$X_1$: YEARS OF AGING

EP 4 343 639 B1

# Fig. 17

DATA ANALYSIS APPARATUS — 100

- MAIN STORAGE DEVICE — 320
- AUXILIARY STORAGE DEVICE — 330 (130)
  - DATA ANALYSIS PROGRAM — 101
  - ANALYTICAL PROCESS DEFINITION — 201
  - RAW DATA GROUP — 131G
  - ANALYTICAL CHARACTERISTIC — 110A
  - SUMMARY INFORMATION — 121A
- INPUT IF — 340
- OUTPUT IF — 350
- COMMUNICATION IF — 360
- 370
- PROCESSOR — 310
  - DEFINITION INTERPRETATING UNIT — 110
  - ANALYTICAL PROCESSING UNIT — 120
    - SUMMARY GENERATING UNIT — 121
    - CHANGE MANAGING UNIT — 122
    - GROUP EXTRACTING UNIT — 123
    - ANALYSIS EXECUTING UNIT — 124

ANALYTICAL APPLICATION — 200

EP 4 343 639 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3591484 A1

- JP 4980395 B